# EUROPEAN PATENT SPECIFICATION

(11) **EP 2 906 650 B1**
(45) Date of publication and mention of the grant of the patent: **04.10.2017**
(21) Application number: 13783760.5
(22) Date of filing: 11.10.2013
(51) Int. Cl.: C09D 183/04, C09D 5/00

(54) **LOW VOC CONSTRUCTION PRIMER**
PRIMER MIT VOC-ARMER KONSTRUKTION
PRIMAIRE DE CONSTRUCTION À FAIBLE TENEUR EN COV

(30) Priority: 12.10.2012 US 201261712916 P
(43) Date of publication of application: 19.08.2015
(73) Proprietor: Dow Corning Corporation, Midland, Michigan 48686-0994 (US); Dow Corning Toray Co., Ltd., Tokyo 100-0004 (JP)
(72) Inventor: DULL, Brent, D., Coleman, MI 48618 (US); GALBRAITH,Thomas, W., Freeland, MI 48623 (US); ADACHI, Hiroshi, Ichihara City Chiba (JP); OTA, Kenji, Ichihara City Chiba (JP)
(74) Representative: Donlan, Andrew Michael
(86) International application number: PCT/US2013/064646
(87) International publication number: WO 2014/059343

(56) References cited:
- EP-A1- 0 044 673
- US-A- 4 122 127
- DATABASE WPI Week 200555 Thomson Scientific, London, GB; AN 2005-536174 XP002716325, -& JP 2005 189623 A (KANEKA CORP) 14 July 2005 (2005-07-14)
- DATABASE WPI Week 201178 Thomson Scientific, London, GB; AN 2011-P41716 XP002716326, -& JP 2011 236356 A (YOKOHAMA RUBBER CO LTD) 24 November 2011 (2011-11-24)

## Description

### TECHNICAL FIELD

The present disclosure relates to primer solutions and, more specifically, to primer solutions that contain low volatile organic content solvents for use in construction applications. The primer solutions can be used to prime painted metal substrates to improve adhesion to and cohesive failure mode of silicone-based sealants.

### BACKGROUND

Silicone sealants are important products for structural glazing and weather sealing applications for the construction industry. The durability of silicone sealants is due in part to their elastomeric character that allows for warranty coverage of 20 years or more. However, the durable sealant matrix must also maintain adhesion to the various building materials that are used in constructing buildings. In some cases there is a need to prepare or treat the surface with a priming agent in order to provide a reactive surface to which the adhesion promoting components of the sealant can react. Functionalized silanes, organosilicon resins and titanates are commonly employed as priming agents for enhancing adhesion of silicone sealants.

Metal substrates are commonly used in construction, and they are often painted in order to prevent oxidation and to achieve an aesthetically pleasing appearance. Some paints are specifically formulated with fluorinated polymers to provide an inert surface that does not fade in color or attract dirt when used in outside applications, where exposure to UV and particulate can otherwise negatively impact the appearance. These inert surfaces that reduce dirt pick up and oxidation can also make sealant adhesion challenging. Thus, these inert surfaces often require a priming step to enable the durability warranty. Duranar® and Duracron® (both available from PPG Industries, Inc., Cleveland, OH) are common brands of paints used on metal substrates for construction.

There are numerous primers that are available for use in construction applications. Typically, these primers consist of reactive silanes, resins and/or other adhesion promoting molecules that are dissolved in solvents to improve the uniform coating of the surface to maximize adhesion development. These solvents release volatile organic compounds (VOCs) into the atmosphere. Because many commonly used solvents are known to contribute to lowering air quality, there are regulatory pressures to reduce their use in almost every country throughout the world. Government Agencies like the United States Environmental Protection Agency (EPA) states like California have placed limits on the VOC content of primers used in their jurisdictions. Various other government agencies and states have placed similar restrictions on the use of VOCs. JP2005-189623 describes a protective film for a polarizer having an adhesive layer (thickness 0.1 to 5 µm) and a water absorbing layer (thickness 0.1 to 5 µm) layered in this order on at least one surface of a polymer film. The polymer film has a thickness of 20 to 300 µm t and ≤18 [g mm]/[m² 24hr] moisture permeability at 70°C and 90% RH. Typically the easy adhesion layer contains an organosilicone resin primer and the water absorbing layer contains a PVA compound.

Therefore, there is currently a need for a more ecologically friendly primer to reduce air pollution and meet the VOC restrictions set by government agencies. Additional requirements for robust, durable adhesion to facilitate offering the desired warranty for building owners also needto be addressed. The embodiments disclosed herein address that need.

The present disclosure allows for use of solvents that are considered VOC exempt per certain government agencies, including the United States EPA and the state of California, while also improving adhesion durability.

### BRIEF SUMMARY

An aspect of the present disclosure is directed to a primer including (i) a tert butyl acetate solvent; (ii) an organometallic reagent selected from organotitanate, organozirconate, organo aluminum, and any combination thereof; (iii) an organotin compound; (iv) a silane with at least three hydrolyzable groups; (v) a polyorganosiloxane resin and (vi) optionally, a second solvent which, when present, is present in a ratio of ingredient (i) : ingredient (vi) of from 70: 30 to 95 : 5.

Another aspect of the present disclosure is directed to a primer composition including (i) a tert butyl acetate solvent; (ii) an organometallic reagent selected from organotitanate, organozirconate, organo aluminum, and any combination thereof; (iii) an organotin compound; (iv) a silane with at least three hydrolyzable groups; (v) a polyorganosiloxane resin and (vi) optionally, a second solvent which, when present, is present in a ratio of ingredient (i): ingredient (vi) of from 70 : 30 to 95 : 5.

Another aspect of the present disclosure is directed to a method of improving adhesion of silicone-based sealants, the method including priming a substrate with a primer including (i) a tert butyl acetate solvent; (ii) an organometallic reagent selected from organotitanate, organozirconate, organo aluminum, and any combination thereof; (iii) an organotin compound; (iv) a silane with at least three hydrolyzable groups; (v) a polyorganosiloxane resin and (vi) optionally, a second solvent which, when present, is present in a ratio of ingredient (i): ingredient (vi) of from 70 : 30 to 95 : 5.

Another aspect of the present disclosure is directed to a method of providing an improved cohesive failure mode of silicone-based sealants within the sealant matrix, the method including priming the substrate with a primer including (i) a tert butyl acetate solvent; (ii) an organometallic reagent selected from organotitanate, organozirconate, organo aluminum, and any combination thereof; (iii) an organotin compound; (iv) a silane with at least three hydrolyzable groups; (v) a polyorganosiloxane resin and (vi) optionally, a second solvent which, when present, is present in a ratio of ingredient (i) : ingredient (vi) of from 70 : 30 to 95: 5.

Another aspect of the present disclosure is directed to a method of priming a painted substrate surface, including the steps of: optionally, cleaning the substrate surface to remove contaminants and drying the substrate surface and applying a primer composition as hereinbefore described to the painted substrate surface. The primer composition includes (i) a tert butyl acetate solvent; (ii) an organometallic reagent selected from organotitanate, organozirconate, organo aluminum, and any combination thereof; (iii) an organotin compound; (iv) a silane with at least three hydrolyzable groups; (v) a polyorganosiloxane resin and (vi) optionally, a second solvent which, when present, is present in a ratio of ingredient (i) : ingredient (vi) of from 70 : 30 to 95 : 5. The method also includes the steps of allowing the primer composition to dry and applying a silicone-based sealant to the painted substrate.

Additional aspects of the invention will be apparent to those of ordinary skill in the art in view of the detailed description of various embodiments, a brief description of which is provided below.

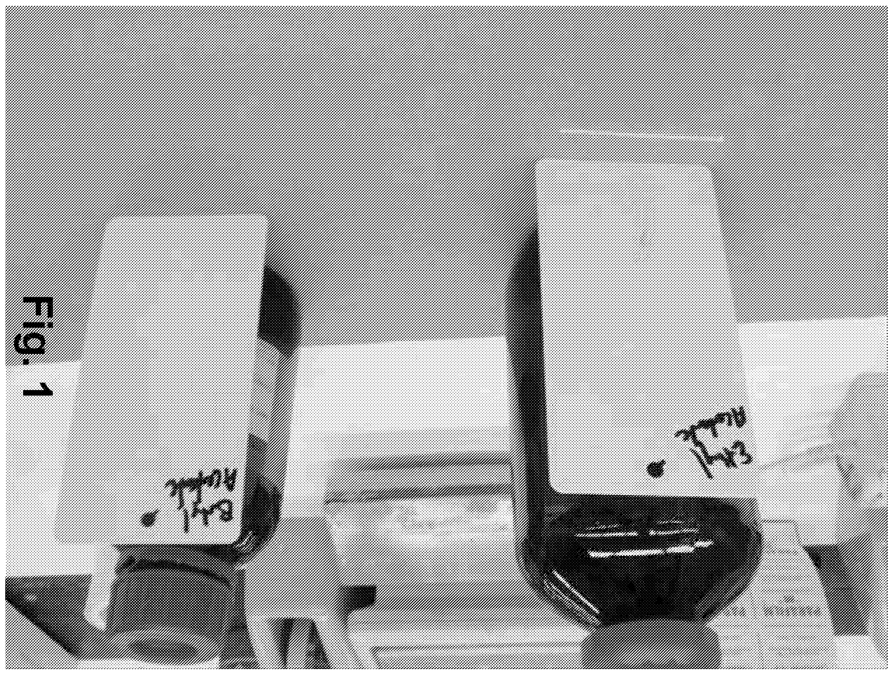

### BRIEF DESCRIPTION OF THE FIGURE

A more complete appreciation of the present disclosure and the many embodiments thereof will be readily obtained as the same becomes better understood by reference to the following detailed description when considered in conjunction with the accompanying Figure which demonstrates a significant difference between ethyl acetate and tert butyl acetate with regards to paint compatibility. Ethyl acetate disrupts the surface of a polyester powder coat paint, as evidenced by surface blisters and paint run-off, whereas the same surface in contact with tert-butyl acetate is essentially unchanged.

### DETAILED DESCRIPTION

Features and advantages of the present disclosure will now be described with occasional reference to specific embodiments. However, the invention may be embodied in different forms and should not be construed as limited to the embodiments set forth herein. Rather, these embodiments are provided so that this disclosure will be thorough and complete and will fully convey the scope of the disclosure to those skilled in the art.

Unless otherwise indicated or defined, all technical and scientific terms used herein have the same meaning as commonly understood by one of ordinary skill in the art to which the invention pertains. The terminology used herein is for describing particular embodiments only and is not intended to be limiting.

The term "ambient conditions" as used throughout the specification refers to surrounding conditions under about one atmosphere of pressure, at about 50 percent relative humidity, and at about 25°C, unless otherwise specified.

Unless otherwise indicated, all numbers expressing quantities of ingredients, properties such as molecular weight, percent by weight, reaction conditions, and so forth as used in the specification and claims are to be understood as being modified in all instances by the term "about." Accordingly, unless otherwise indicated, the numerical properties set forth in the specification and claims are approximations that may vary depending on the desired properties sought to be obtained in embodiments of the present disclosure. Notwithstanding that the numerical ranges and parameters setting forth the broad scope of the disclosure are approximations, the numerical values set forth in the specific examples are reported as precisely as possible. Any numerical values, however, inherently contain errors necessarily resulting from error found in their respective measurements.

All percentages, parts, and ratios are based upon the total weight of the primer composition, unless otherwise specified and the total weight of any primer composition in accordance with the above is 100 weight %.

The present disclosure relates to a primer composition for use in various construction applications. The primer composition may be used to treat painted substrates, such as metal substrates, prior to application of a silicone-based sealant. The primer composition may include (i) a tert butyl acetate solvent; (ii) an organometallic reagent selected from organotitanate, organozirconate, organo aluminum, and any combination thereof; (iii) an organotin compound; (iv) a silane with at least three hydrolyzable groups; (v) a polyorganosiloxane resin and (vi) optionally, a second solvent. The primer composition may include between about 20 and about 99.5 percent by weight of ingredient (i), or, alternatively, between about 50 and about 95 percent by weight of ingredient (i) or, alternatively, between about 70 and about 95 percent by weight of ingredient (i). The primer composition may include between about 0.05 and about 5 percent by weight of ingredient (ii) or, alternatively, between about 0.5and about 4 percent by weight of ingredient (ii). The primer composition may include between about 0.05 and about 10 percent of ingredient (iii) or, alternatively, between about 2 and about 10 percent by weight of ingredient (iii). The primer composition may include between about 0.05 and about 10 percent by weight of ingredient (iv) or, alternatively, between about 0.5 and about 4 percent by weight of ingredient (iv). The primer composition may include between about 0.1 and about 5 percent by weight of ingredient (v) or, alternatively, between about 0.5 and about 4 percent by weight of ingredient (v). The primer composition may include between about 0 and about 80 percent by weight of ingredient (vi). Typically however, when ingredient (vi) is present, it is present in a ratio of ingredient (i): ingredient (vi) of from 70:30 to 95:5. The total weight of any primer composition herein is 100 weight %

The primer composition according to the present disclosure may be a transparent liquid. The primer composition may be stable at both very low and very high temperatures. The primer composition according to the present disclosure may be configured to have VOC content of below about 250 g/l. Alternatively, the primer composition according to the present disclosure may be configured to have VOC content of below about 100 g/l.

The present disclosure also relates to a method of improving adhesion of silicone-based sealants, the method including priming a substrate with a primer including (i) a tert butyl acetate solvent; (ii) an organometallic reagent selected from organotitanate, organozirconate, organo aluminum, and any combination thereof; (iii) an organotin compound; (iv) a silane with at least three hydrolyzable groups; (v) a polyorganosiloxane resin and (vi) optionally, a second solvent. Application of the primer according to the present disclosure results in greater adhesion than application of primers generally available in the art that do not include adhesion enhancers.

Applying a primer according to the present disclosure to a substrate improves cohesive failure mode of silicone-based sealants within the sealant matrix. The cohesive failure mode may be increased to above about 70% by applying a primer according to the present disclosure to a substrate.

Another aspect of the present disclosure is directed to a method of priming a painted substrate surface, including the steps of: optionally, cleaning the substrate surface to remove contaminants and drying the substrate surface and applying a primer composition to the painted substrate surface. The primer composition includes (i) a tert butyl acetate solvent; (ii) an organometallic reagent selected from organotitanate, organozirconate, organo aluminum, and any combination thereof; (iii) an organotin compound; (iv) a silane with at least three hydrolyzable groups; (v) a polyorganosiloxane resin and (vi) optionally, a second solvent. The method also includes the steps of allowing the primer composition to dry and applying a silicone-based sealant to the painted substrate.

There is a wide variety of painted substrates to which the primer composition according to the present disclosure may be applied. The primer may be applied to painted metal substrates. The metals may include aluminum, aluminum alloys, cast iron, steel alloys, stainless steel, copper, zinc, magnesium, galvanized steel, and many others.

There is a wide variety of types of paints that may be applied to such substrates to produce a painted substrate. Specific examples of paint include latex paint, rubber base paint, textured paint, alkyd resin paint, acrylic, polyvinylidene fluoride (PVF₂), polyester powder and others.

The surface of the painted substrates should typically be cleaned and allowed to dry before applying the primer. The surface may be cleaned using a variety of different methods. One method may include first brushing away any loose material on the surface of the substrate and then wiping with an appropriate solvent on a coarse-free cloth. The surface should be wiped dry immediately after cleaning.

Then, the primer according to the present disclosure should be applied to the substrate. The primer may be applied in a variety of different ways. One method includes applying the primer with a lint-free cloth to maximize primer coverage rate and to obtain a consistent film thickness. It is also possible to use a brush or any other acceptable tool known to those of ordinary skill in the art to apply the primer according to the present disclosure. Following application, the primer should be allowed to dry. Typically, the primer can dry in about 5 to about 60 minutes or less at ambient conditions. However, the drying time may be varied depending on the amount of tert butyl acetate and the optional second solvent or mixture of solvents added. An appropriate second solvent may be selected to adjust the drying time depending on the desired application, as will be discussed in further detail below.

The primer according to the present invention causes minimal or negligible run-off of the paint as can be seen in the FIG. Thus, the application of the primer according to the present disclosure to a painted substrate allows the paint to remain intact and does not cause surface marring or run-off of the paint.

### Organometallic Reagent (ingredient (ii))

Organometallic reagents that may be used in the primer composition according to the present disclosure include organotitanate, organozirconate, aluminum organometallic compounds, and any combination thereof. Organotitanate may include, but is not limited to, tetrabutyl titanate, tetrapropoxy titanate, tetraethoxy titanate, tetraamyl titanate, titanium di-isopropoxy bis ethylacetoacetate, di-isopropoxy bis acetylacetonate, and any combination thereof. Organozirconate may include, but is not limited to, zirconium acetylacetonate. Aluminum organometallic compounds may include, but is not limited to, aluminum acetylacetonate.

### Organotin Compound (ingredient (iii))

The organotin compound used in the primer according to the present disclosure may include, but is not limited to, alkyltin ester compounds such as Dibutyltin dioctoate, , Dibutyltin dimaleate, butyltin 2-ethylhexoate dimethyl tin di-neodecyl ester, or dibutyltin dilaurate, dibutyl tin laulate, dibutyl tin acetate and dibutyl tin 2-ethyl hexanoate, and any combination thereof.

### Silane (Ingredient (iv))

Silanes used in the primer composition according to the present disclosure include silanes with at least three hydrolyzable groups per molecule which are reactive when the silane has three silicon-bonded hydrolysable groups per molecule; the fourth group is suitably a non-hydrolysable silicon-bonded organic group. These silicon-bonded organic groups are suitably hydrocarbyl groups which are optionally substituted by halogen such as fluorine and chlorine. Examples of such fourth groups include alkyl groups (for example methyl, ethyl, propyl, and butyl); cycloalkyl groups (for example cyclopentyl and cyclohexyl); alkenyl groups (for example vinyl and allyl); aryl groups (for example phenyl, and tolyl); aralkyl groups (for example 2-phenylethyl) and groups obtained by replacing all or part of the hydrogen in the preceding organic groups with halogen. Preferably however, the fourth silicon-bonded organic group is methyl.

Specific examples of silanes used in the primer composition according to the present disclosure include but are not limited to, alkyltrialkoxysilanes such as methyltrimethoxysilane (MTM) ethyltrimethoxysilane and methyltriethoxysilane, alkenyltrialkoxy silanes such as vinyltrimethoxysilane and vinyltriethoxysilane, isobutyltrimethoxysilane (iBTM). Other suitable silanes include, phenyltrimethoxysilane, alkoxytrioximosilane, alkenyltrioximosilane, , 3,3,3-trifluoropropyltrimethoxysilane, methyltris(methylethylketoximo)silane, vinyl-tris-methylethylketoximo)silane, methyltris(methylethylketoximino)silane, methyltris(isopropenoxy)silane, vinyltris(isopropenoxy)silane, (ethylenediaminepropyl)trimethoxysilane, vinyl trimethoxysilane, tetraalkylorthosilicate having the general formula SiOR₄, tetraethoxysilane, mercapto functional-silanes, glycidyloxypropyl trimethoxysilane, and any combination thereof.

### Polyorganosiloxane Resin (Ingredient (v))

Polyorganosiloxane resins used in the primer composition according to the present disclosure generally may be depicted using the following general formula of the following groups (R¹R²R³SiO_{1/2})ₐ(R⁴R⁵SiO_{2/2})_{b}(R⁶SiO_{3/2})_{c}(SiO_{4/2})_{d}. (often referred to as M, D, T, or Q units respectively) with 0<a<1, b≥0, c≥0, 0<d<1, a+b+c+d=1, and 0.2<a/d<3.5, (when a, b, c and d are mole fractions) with the resin having a weight-average molecular weight between about 1,000 and about 100,000, on a standard polystyrene basis by gel permeation chromatography.

Each R¹-R⁶ is independently selected from a monovalent hydrocarbon groups, a carbinol group, an alkoxy group (preferably methoxy or ethoxy) or an amino group. Suitable exemplary monovalent hydrocarbon groups include, but are not limited to, alkyl groups such as methyl, ethyl, propyl, pentyl, octyl, undecyl, and octadecyl; alkenyl groups, cycloalkyl groups such as cyclopentyl and cyclohexyl; and aryl groups such as phenyl, tolyl, xylyl, benzyl, and 2-phenylethyl, and any combination thereof. In one embodiment, the organopolysiloxane is free of halogen atoms. In another embodiment, the organopolysiloxane includes one or more halogen atoms. Halogenated hydrocarbon groups include, but are not limited to, 3,3,3-trifluoropropyl, 3-chloropropyl, chlorophenyl, and 6,6,6,5,5,4,4,3,3-nonafluorohexyl groups; and combinations thereof. The cyano-functional groups may include cyanoalkyl groups such as cyanoethyl and cyanopropyl groups, and combinations thereof.

Suitable alkenyl groups contain from 2 carbon atoms to about 6 carbon atoms and may be exemplified by, but not limited to, vinyl, allyl, and hexenyl. The alkenyl groups in this component may be located at terminal, pendant (non-terminal), or both terminal and pendant positions. R¹-R⁶ do not include acrylate functional groups. One particularly preferred resin for the present invention is an MQ resin which comprises substantially only M units (R¹R²R³SiO_{1/2}) and Q units (SiO_{4/2}). But may contain minor amounts of D units (R⁴R⁵SiO_{2/2}) and/or T units (R⁶SiO_{3/2}). The polyorganosiloxane resin may have a weight-average molecular weight between about 1,000 and about 100,000, on a standard polystyrene basis by gel permeation chromatography. The polyorganosiloxane resin may have less than about 0.7% of hydroxyl groups bonded to silicon atoms

### Solvents (Ingredient (vi))

A variety of solvents may be used in the primer according to the present disclosure. Solvents that have gained VOC exempt status may be used. Solvents that may be used include, but are not limited to, methyl acetate, ethyl acetate, n-butyl acetate, methyl formate, ethyl formate, and any combination thereof. Typically however, when ingredient (vi) is present, it is present in a ratio of ingredient (i): ingredient (vi) of from 70:30 to 95:5. In order to achieve faster drying times, a larger proportion of optional second solvent (vi) is used.

The optional second solvents used in the present disclosure may be fully miscible with the other ingredients used in the primer composition - namely, the organometallic reagent, the organotin compound, the silane, and the polyorganosiloxane resin.

### Silicone-Based Sealant

A variety of different silicone-based sealants may be applied to the painted substrate after priming with the primer according to the present disclosure.

Typically the silicone based sealant will comprise a one or two part composition containing the following ingredients
(A) A polymer selected from an organopolysiloxane polymer containing at least 2 hydrolysable groups per molecule and a telechelic polymer having silicon containing end groups containing at least 2 hydrolysable groups per molecule
(B) A siloxane and/or silane cross-linker having at least three groups per molecule which are reactable with the hydrolysable groups in (A);
(C) one or more reinforcing fillers and
(D) a condensation catalyst

Other ingredients which may be included in the compositions include but are not restricted to non-reinforcing fillers, co-catalysts for accelerating the cure of the composition such as metal salts of carboxylic acids and amines; extenders and/or plasticisers, rheological modifiers; adhesion promoters, pigments, UV stabilizers, Chain extenders, Fungicides and/or biocides (which may suitably by present in an amount of from 0 to 0.3% by weight), water scavengers, (typically the same compounds as those used as cross-linkers or silazanes). It will be appreciated that some of the additives are included in more than one list of additives. Such additives would then have the ability to function in all the different ways referred to. Examples of each component of a silicone based sealant described above are detailed in US20080284106.

### EXAMPLES

These examples are intended to illustrate the invention to one of ordinary skill in the art and should not be interpreted as limiting the scope of the invention set forth in the claims. All measurements and experiments were conducted at 25ºC, unless indicated otherwise.

Features and advantages of the present disclosure will now be described with occasional reference to specific embodiments. However, the disclosure may be embodied in different forms and should not be construed as limited to the embodiments set forth herein. Rather, these embodiments are provided so that this disclosure will be thorough and complete and will fully convey the scope of the disclosure to those skilled in the art.

### Examples 1-5

Table 1a below shows the compositions for Examples 1-5. Example 1 was included preparation of a primer composition with n-Hexane and Isopropyl Alcohol (IPA), which represents a solvent mixture commonly used in the prior art primer formulations. The resulting primer was applied on a painted aluminum substrate. The quality of the adhesion of the sealant to the painted aluminium surface pre-treated with the primer as hereinbefore described was then evaluated by in accordance with Standard tensile adhesion property test method JIS A 1439. Primers were aged for 30 minutes at 23ºC, 50% relative humidity. Type H test specimens (12 mm x 12 mm x 50 mm) were aged for 7 days at 23ºC, 50% relative humidity plus at 50ºC for 7 days for initial data.

Examples 2 and 3 were formulated with tert butyl acetate solvent. The resulting formulation was applied on a painted aluminum substrate. Adhesion spectrum was then evaluated as discussed above.

Example 4 was formulated with ethyl acetate solvent. The resulting formulation was applied on a painted aluminum substrate. Adhesion spectrum was then evaluated as discussed above.

Example 5 was formulated with n-butyl acetate. The resulting formulation was applied on a painted aluminum substrate. Adhesion spectrum was then evaluated as discussed above.

In the adhesion assessment, the results for which are in Table 1b, the Type H test specimens was tested with a tensiometer and the mode of failure was rated as follows:
AF: adhesive failure - poor adhesion)
BF: boundary or mixed mode (adhesive/cohesive) failure - acceptable adhesion
CF: cohesive failure - excellent adhesion

**Table 1a: Examples 1-5**

| In which | | | | | | |
|---|---|---|---|---|---|---|
| **Examples** | | 1 | 2 | 3 | 4 | 5 |
| **Formulation** | | n-Hexane/ IPA | Tert-butyl acetate 1 | Tert-butyl acetate 2 | Ethyl acetate | n-butyl acetate |
| N-HEXANE | Solvent, Specific gravity (Sg)=0.655g/ml, boiling point (b.p.).=69ºC | 86 | | | | |
| Isopropyl Alcohol | Solvent, Sg=0.781g/ml, b.p.=82.4ºC | 2.5 | | | | |
| Tert-butyl acetate | Solvent, Sg=0.866g/ml, b.p.=98ºC | | 88.5 | 90.8 | | |
| Ethyl acetate | Solvent, Sg=0.897g/ml, b.p.=77.1ºC | | | | 91.1 | |
| n-butyl acetate | Solvent, Sg=0.880g/ml, b.p.=126ºC | | | | | 90.81 |
| | MQ Polyorganosiloxane Resin Consisting Essentially of (CH₃)₃SiO_{1/2} (M) Units and SiO_{4/2} (Q) Units in a Molar Ratio of M Units to Q Units of 0.8:1 but with an Average of 2.1 Mass % Hydroxyl Groups | 2.0 | 2.0 | 1.6 | 1.5 | 1.6 |
| | Tetrabutyl Titanate | 2.0 | 2.0 | 1.6 | 1.5 | 1.6 |
| | Phenyltrimethoxysilane | 2.0 | 2.0 | 1.6 | 1.5 | 1.6 |
| | (Ethylenediaminepropyl)t rimethoxysilane | 3.0 | 3.0 | 2.4 | 2.3 | 2.4 |
| | Dimethyl Tin Di-Neodecyl Ester | 2.5 | 2.5 | 2.0 | 1.9 | 2.0 |
| Coating weight (g/m²)-70ºC@ 60min | | 0.26 | 0.54 | 0.26 | 0.26 | 0.26 |

| | | | | | | |
|---|---|---|---|---|---|---|
| Note: The values of specific gravity (Sg) and boiling point (b.p.) in Table 1a were obtained from standard reference materials and not measured. | | | | | | |

**Table 1b: Examples 1-5**

| **Adhesion to coated aluminums** | | | | | | |
|---|---|---|---|---|---|---|
| Substrate | | Ex 1 | Ex 2 | Ex 3 | Ex 4 | Ex 5 |
| Acryl Ectrocoated Aluminum | Sankyo Tateyama | CF 100 | CF 100 | CF 100 | AF 100 | CF 100 |
| | LIXIL | CF 100 | CF 100 | CF 100 | CF 100 | CF 100 |
| PVFD(polyvinylidene fluoride) Coated Duffner#100S(KYNAR)/DAI NIPPON TORYO | Solid | AF 100 | CF 100 | CF 100 | CF50 | CF 100 |
| | | | | | AF 50 | |
| | Metallic color | AF 100 | CF90, AF 10 | CF 100 | CF 100 | CF 100 |
| FEVE Coated (1 part type) V-FLON #2000(LUMIFLON)/DAI NIPPON TORYO | Solid | CF 100 | CF 100 | CF 100 | AF 100 | CF 100 |
| | Metallic color | AF 100 | CF 100 | CF 70, AF 30 | AF100 | AF 100 |
| FEVE Coated (2part type) V-FLON #200(LUMIFLON)/DAI NIPPON TORYO | Solid | CF 100 | CF 100 | CF 100 | CF 100 | CF 100 |
| | Metallic color | CF 100 | CF 100 | CF 100 | CF 100 | CF 100 |
| Thermosetting acryl resin paint DURACRON CW/DAI NIPPON TORYO | Solid | CF 100 | CF 100 | CF 100 | CF 100 | CF 100 |
| | Metallic color | AF 100 | CF90, AF 10 | CF 100 | CF 100 | CF 100 |
| Acryl uretane resin type coating V-CROMA100CW/DAI NIPPON TORYO | Solid | CF100 | CF 100 | CF 100 | CF 100 | CF 100 |
| | Metallic color | CF100 | CF 100 | CF 100 | AF 100 | CF 50, AF 50 |
| Polyester TGIC powder coating Corro-Coat PE-F Series 1303/JOTUN | Solid | CF70, AF 30 | CF 100 | CF 100 | CF 100 | CF 100 |
| | Metallic color | CF100 | CF 100 | CF 100 | CF 100 | CF 100 |
| Super weather resistant polyester powder coating (TGIC-free) Drylac Series 68/Tiger Drylac | Solid | CF 70 | CF 100 | CF 100 | CF 100 | CF 100 |
| | | AF30 | | | | |
| | Metallic color | CF100 | CF 100 | CF 100 | CF 100 | CF90, AF 10 |

The primed painted aluminum surface was coated with a silicone sealant comprising:-Dimethyl hydroxyl terminated dimethyl siloxane polymer having a viscosity of 80,000mPa.s at 25°C, calcium carbonate filler treated with C8 - C18 mixture of unsaturated fatty acids, trimethylsiloxy terminated dimethyl siloxane plasticiser having a viscosity of 100mPa.s at 25°C, a mixture of alkyl trimethoxysilane and aryl trimethoxysilane crosslinkers and Dimethyltindineodecyl ester catalyst. Viscosity measurements were carried out using a Brookfield^{®} HB DV-II + PRO with a cone plate spindle at a speed of 5 rpm.

In Table 2 below, five different metal substrates were wiped with five different solvents, to compare the amount and extent of damage to the painted surface. Each wipe was performed for 10 seconds at ambient conditions. Each solvent was then scored on a scale of "+++" to "---", wherein "+++" is used to represent no damage or otherwise negative effect to the painted surface and "---" is used to represent the situation where the solvent completely removes the paint down to the metal.

**Table 2: Wipe Results with Five Different Solvents**

| *Chemical Name* | *Substrate Type* | | | | |
|---|---|---|---|---|---|
| | *White Polyester Powder Coat Aluminum* | *Tnemec 1C 66- 35GR Hi-Build Epoxoline Black* | *Aluminum w*/*PPG Dark Briar Sunstorm UC106694F* | *Aluminum w*/*PPG Bristol Beige Duranar LT149975XL* | *Aluminum w*/*Tiger Drylac Yellow Green Powder Coat 544*/*50005* |
| *Ethyl Acetate* | --- | ++ | -- | ++ | - |
| *Methyl Acetate* | --- | ++ | -- | + | - |
| *Tert Butyl Acetate* | +++ | +++ | +++ | +++ | +++ |
| *Methyl Formate* | --- | ++ | - | ++ | + |
| *Acetone* | -- | + | -- | *0* | +++ |

As seen from Table 2 above, tert butyl acetate had the best results when applied to all five types of paint, with no or minimal damage to the paint. All the other solvents did not demonstrate consistent results. Moreover, all the other solvents caused significant damage to white polyester paint, with three of the solvents - ethyl acetate, methyl acetate, and methyl formate - completely removing the paint. Further, all the other solvents also significantly damaged Aluminum w/PPG Dark Briar Sunstorm UC106694 paint.

While the present disclosure is susceptible to various modifications and alternative forms, specific embodiments have been shown by way of example in the examples and described in detail herein. It should be understood, however, that the present disclosure is not intended to be limited to the particular forms disclosed. Rather, the present disclosure is to cover all modifications, equivalents, and alternatives falling within the scope of the present disclosure as defined by the appended claims.

## Claims

1. A primer composition, comprising
(i) a tert butyl acetate solvent;
(ii) an organometallic reagent selected from organotitanate, organozirconate, organoaluminum, and any combination thereof;
(iii) an organotin compound;
(iv) a silane with at least 3 hydrolyzable groups;
(v) a polyorganosiloxane resin and
(vi) optionally a second solvent which, when present, is present in a weight ratio of ingredient (i) : ingredient (vi) of from 70 : 30 to 95 : 5.

2. The primer composition in accordance with any preceding claim including between 0.05 percent by weight and 5 percent by weight of ingredient (ii) and/or between 0.05 percent by weight and 10 percent by weight of ingredient (iii) and/or between 0.05 percent by weight and 10 percent by weight of ingredient (iv) and/or between 0.1 percent by weight and 5 percent by weight of ingredient (v), where 100% by weight is the total weight of the primer composition.

3. The primer composition of in accordance with any preceding claim, wherein ingredient (vi) is selected from VOC exempt solvents or any combination thereof.

4. The primer composition in accordance with any preceding claim, wherein ingredient (ii) is selected from tetrabutyl titanate, tetrapropoxy titanate, zirconium acetylacetonate, tetraethoxy titanate, tetraamyl titanate, titanium di-isopropoxy bis ethylacetoacetate, di-isopropoxy bis acetylacetonate, aluminum acetylacetonate, and any combination thereof and/or wherein ingredient (iii) is selected from dimethyl tin di-neodecyl ester, or dibutyltin dilaurate, dibutyl tin laulate, dibutyl tin acetate and dibutyl tin 2-ethyl hexanoate, and any combination thereof.

5. The primer composition in accordance with any preceding claim, wherein ingredient (iv) includes a phenyltrimethoxysilane and an (ethylenediaminepropyl)trimethoxysilane or wherein ingredient (iv) is selected from phenyltrimethoxysilane, (ethylenediaminepropyl)trimethoxysilane, vinyl trimethoxysilane, tetraalkylorthosilicate having the general formula SiOR₄, like tetraethoxysilane, mercapto functional-silanes, glycidyloxypropyl trimethoxysilane, and any combination thereof.

6. The primer composition in accordance with any preceding claim, wherein ingredient (v) is of the general formula:
(R¹R²R³SiO_{1/2})ₐ(R⁴R⁵SiO_{2/2})_{b}(R⁶SiO_{3/2})_{c}(SiO_{4/2})_{d},
wherein 0<a<1, b≥0, c≥0, 0<d<1, a+b+c+d=1, and 0.2<a/d<3.5; and a, b, c and d are mole fractions, R¹-R⁶ are independently selected from a monovalent hydrocarbon groups, a carbinol group, an alkoxy group or an amino group; and
wherein ingredient (v) has a weight-average molecular weight between 1,000 and 100,000, on a standard polystyrene basis by gel permeation chromatography.

7. The primer composition of claim 6, wherein b and c in ingredient (v) have a value of about 0 and/or wherein R¹-R⁶ do not include acrylate functional groups.

8. The primer composition in accordance with any preceding claim, wherein the ingredients (i) and (vi) are fully miscible with ingredient (ii), (iii), (iv), and (v), either alone or in combination.

9. A method for improving adhesion of silicone-based sealants to painted substrates, comprising priming the substrate with the composition as defined in any one of claims 1-8.

10. A method of providing an improved cohesive failure mode of silicone-based sealants within the sealant matrix, comprising priming the substrate with the composition as defined in any one of claims 1- 8.

11. A method of priming a painted substrate surface, comprising the steps of:
optionally, cleaning the substrate surface to remove contaminants and drying the substrate surface;
applying a primer composition to the painted substrate surface, the composition comprising:
(i) a tert butyl acetate solvent;
(ii) an organometallic reagent selected from organotitanate, organozirconate, aluminum, and any combination thereof;
(iii) an organotin compound;
(iv) a silane with at least three hydrolyzable groups; and
(v) a polyorganosiloxane resin;
(vi) optionally, a second solvent selected from VOC exempt solvents which, when present, is present in a weight ratio of ingredient (i) : ingredient (vi) of from 70: 30 to 95 : 5.
allowing the primer composition to dry; and applying a silicone-based sealant to the painted substrate.

12. A primer composition, in accordance with claim 1 comprising
(i) a tert butyl acetate solvent;
(ii) an organometallic reagent selected from organotitanate, organozirconate, aluminum, and any combination thereof;
(iii) an organotin compound;
(iv) an alkoxy-functional silane; and
(v) a polyorganosiloxane resin having the general formula:
(R¹R²R³SiO_{1/2})ₐ(R⁴R⁵SiO_{2/2})_{b}(R⁶SiO_{3/2})_{c}(SiO_{4/2})_{d},
wherein 0<a<1, b≥0, c≥0, 0<d<1, a+b+c+d=1, and 0.2<a/d<3.5; with a, b, c and d being mole fractions, R¹-R⁶ are independently selected from monovalent hydrocarbon groups and wherein R¹-R⁶ do not include acrylate functional groups; and
(vi) optionally, a second solvent selected from VOC exempt solvents which, when present, is present in a weight ratio of ingredient (i) : ingredient (vi) of from 70 : 30 to 95 : 5, or any combination thereof;
and
wherein the resin has a weight-average molecular weight between 1,000 and 100,000, on a standard polystyrene basis by gel permeation chromatography.

## Patentansprüche

1. Primerzusammensetzung, umfassend
(i) ein Tertbutylacetat-Lösungsmittel;
(ii) ein organometallisches Reagens, ausgewählt aus Organotitanat, Organozirconat, Organoaluminium und einer beliebigen Kombination davon;
(iii) eine organische Zinnverbindung;
(iv) ein Silan mit mindestens 3 hydrolysierbaren Gruppen;
(v) ein Polyorganosiloxanharz und
(vi) wahlweise ein zweites Lösungsmittel, das, wenn vorhanden, in einem Gewichtsverhältnis von Inhaltsstoff (i) : Inhaltsstoff (vi) von 70:30 bis 95:5 vorhanden ist.

2. Primerzusammensetzung nach einem der vorstehenden Ansprüche, die zwischen 0,05 Gewichtsprozent und 5 Gewichtsprozent Inhaltsstoff (ii) und/oder zwischen 0,05 Gewichtsprozent und 10 Gewichtsprozent Inhaltsstoff (iii) und/oder zwischen 0,05 Gewichtsprozent und 10 Gewichtsprozent Inhaltsstoff (iv) und/oder zwischen 0,1 Gewichtsprozent und 5 Gewichtsprozent Inhaltsstoff (v) aufweist, wobei 100 Gew.-% das Gesamtgewicht der Primerzusammensetzung ist.

3. Primerzusammensetzung nach einem der vorstehenden Ansprüche, wobei Inhaltsstoff (vi) aus Lösungsmitteln, die frei von flüchtigen organischen Verbindungen (VOC) sind, oder einer beliebigen Kombination davon ausgewählt ist.

4. Primerzusammensetzung nach einem der vorstehenden Ansprüche, wobei Inhaltsstoff (ii) aus Tetrabutyltitanat, Tetrapropoxytitanat, Zirconiumacetylacetonat, Tetraethoxytitanat, Tetraamyltitanat, Titandiisopropoxybis-ethylacetoacetat, Diisopropoxy-bis-acetylacetonat, Aluminiumacetylacetonat und einer beliebigen Kombination davon ausgewählt ist und/oder wobei Inhaltsstoff (iii) aus Dimethylzinndineodecylester oder Dibutylzinndilaurat, Dibutylzinnlaulat, Dibutyltinacetat und Dibutylzinn-2-ethylhexanoat und einer beliebigen Kombination davon ausgewählt ist.

5. Primerzusammensetzung nach einem der vorstehenden Ansprüche, wobei Inhaltsstoff (iv) ein Phenyltrimethoxysilan und ein (Ethylendiaminpropyl)trimethoxysilan aufweist oder wobei Inhaltsstoff (iv) aus Phenyltrimethoxysilan, (Ethylendiaminpropyl)trimethoxysilan, Vinyltrimethoxysilan, Tetraalkylorthosilicat mit der allgemeinen Formel SiOR₄, wie Tetraethoxysilan, mercaptofunktionellen Silanen, Glycidyloxypropyltrimethoxysilan und einer beliebigen Kombination davon ausgewählt ist.

6. Primerzusammensetzung nach einem der vorstehenden Ansprüche, wobei Inhaltsstoff (v) die folgende allgemeine Formel aufweist:
(R¹R²R³SiO_{1/2})ₐ(R⁴R⁵SiO_{2/2})_{b}(R⁶SiO_{3/2})_{c}(SiO_{4/2})_{d},
wobei 0<a<1, b≥0, c≥0, 0<d<1, a+b+c+d=1 und 0,2<a/d<3,5; und a, b, c und d Molfraktionen sind, R¹-R⁶ unabhängig voneinander aus einwertigen Kohlenwasserstoffgruppen, einer Carbinolgruppe, einer Alkoxygruppe oder einer Aminogruppe ausgewählt sind; und
wobei Inhaltsstoff (v) ein Molekulargewicht-Gewichtsmittel zwischen 1.000 und 100.000 auf einer Standard-Polystyrolbasis durch Gelpermeationschromatographie aufweist.

7. Primerzusammensetzung nach Anspruch 6, wobei b und c in Inhaltsstoff (v) einen Wert von ungefähr 0 aufweisen und/oder wobei R¹-R⁶ keine funktionellen Acrylatgruppen aufweisen.

8. Primerzusammensetzung nach einem der vorstehenden Ansprüche, wobei die Inhaltsstoffe (i) und (vi) mit Inhaltsstoff (ii), (iii), (iv) und (v) entweder allein oder in Kombination vollständig mischbar sind.

9. Verfahren zum Verbessern der Adhäsion silikonbasierter Dichtmittel an gestrichenen Substraten, umfassend das Grundieren des Substrats mit der Zusammensetzung nach einem der Ansprüche 1-8.

10. Verfahren zum Bereitstellen eines verbesserten Kohäsionsbruchmodus silikonbasierter Dichtmittel innerhalb der Dichtmittelmatrix, umfassend das Grundieren des Substrats mit der Zusammensetzung nach einem der Ansprüche 1-8.

11. Verfahren zum Grundieren einer gestrichenen Substratoberfläche, das die folgenden Schritte umfasst:
wahlweise Reinigen der Substratoberfläche, um Verunreinigungen zu entfernen, und Trocknen der Substratoberfläche;
Auftragen einer Primerzusammensetzung auf die gestrichene Substratoberfläche, wobei die Zusammensetzung Folgendes umfasst:
(i) ein Tertbutylacetat-Lösungsmittel;
(ii) ein organometallisches Reagens, ausgewählt aus Organotitanat, Organozirconat, Aluminium und einer beliebigen Kombination davon;
(iii) eine organische Zinnverbindung;
(iv) ein Silan mit mindestens drei hydrolysierbaren Gruppen; und
(v) ein Polyorganosiloxanharz;
(vi) wahlweise ein zweites, aus VOC-freien Lösungsmitteln ausgewähltes Lösungsmittel, das, wenn vorhanden, in einem Gewichtsverhältnis von Inhaltsstoff (i) : Inhaltsstoff (vi) von 70:30 bis 95:5 vorhanden ist;
Trocknenlassen der Primerzusammensetzung; und Auftragen eines silikonbasierten Dichtmittels auf das gestrichene Substrat.

12. Primerzusammensetzung nach Anspruch 1, umfassend
(i) ein Tertbutylacetat-Lösungsmittel;
(ii) ein organometallisches Reagens, ausgewählt aus Organotitanat, Organozirconat, Aluminium und einer beliebigen Kombination davon;
(iii) eine organische Zinnverbindung;
(iv) ein alkoxyfunktionelles Silan; und
(v) ein Polyorganosiloxanharz mit der allgemeinen Formel:
(R¹R²R³SiO_{1/2})ₐ(R⁴R⁵SiO_{2/2})_{b}(R⁶SiO_{3/2})_{c}(SiO_{4/2})_{d},
wobei 0<a<1, b≥0, c≥0, 0<d<1, a+b+c+d=1 und 0,2<a/d<3,5; wobei a, b, c und d Molfraktionen sind, R¹-R⁶ unabhängig voneinander aus einwertigen Kohlenwasserstoffgruppen ausgewählt sind und wobei R¹-R⁶ keine funktionellen Acrylatgruppen aufweisen; und
(vi) wahlweise ein zweites, aus VOC-freien Lösungsmitteln ausgewähltes Lösungsmittel, das, wenn vorhanden, in einem Gewichtsverhältnis von Inhaltsstoff (i) : Inhaltsstoff (vi) von 70:30 bis 95:5 vorhanden ist, oder eine beliebige Kombination davon;
und
wobei das Harz ein Molekulargewicht-Gewichtsmittel zwischen 1.000 und 100.000 auf einer Standard-Polystyrolbasis durch Gelpermeationschromatographie aufweist.

## Revendications

1. Composition d'apprêt, comprenant
(i) un solvant d'acétate de tert-butyle;
(ii) un réactif organométallique choisi parmi un organotitanate, un organozirconate, un organoaluminium et n'importe quelle combinaison de ceux-ci;
(iii) un composé d'organoétain ;
(iv) un silane avec au moins 3 groupes hydrolysables;
(v) une résine de polyorganosiloxane et
(Vi) facultativement un second solvant qui, lorsqu'il est présent, l'est dans un rapport pondéral de l'ingrédient (i) à l'ingrédient (vi) de 70:30 à 95:5.

2. Composition d'apprêt selon la revendication précédente, comprenant entre 0,05 pour cent en poids et 5 pour cent en poids d'ingrédient (ii) et/ou entre 0,05 pour cent en poids et 10 pour cent en poids d'ingrédient (iii) et/ou entre 0,05 pour cent en poids et 10 pour cent en poids d'ingrédient (iv) et/ou entre 0,1 pour cent en poids et 5 pour cent en poids d'ingrédient (v), dans laquelle le poids total de la composition d'apprêt est de 100 %.

3. Composition d'apprêt selon n'importe laquelle des revendications précédentes, dans laquelle l'ingrédient (vi) est choisi parmi des solvants exempts de VOC ou n'importe quelle combinaison de ceux-ci.

4. Composition d'apprêt selon n'importe laquelle des revendications précédentes, dans laquelle l'ingrédient (ii) est choisi parmi le titanate de tétrabutyle, le tétrapropoxytitanate, l'acétylacétonate de zirconium, le tétraéthoxytitanate, le titanate de tétraamyle, le di-isopropoxy-bis-éthylacétoacétate de titane, le di-isopropoxy-bis-acétylacétonate, l'acétylacétonate d'aluminium et n'importe quelle combinaison de ceux-ci et/ou dans laquelle l'ingrédient (iii) est choisi parmi le di-néodécylester de diméthylétain ou le dilaurate de dibutylétain, le laurate de dibutylétain, l'acétate de dibutylétain et le 2-éthylhexanoate de dibutylétain et n'importe quelle combinaison de ceux-ci.

5. Composition d'apprêt selon n'importe laquelle des revendications précédentes, dans laquelle l'ingrédient (iv) comprend un phényltriméthoxysilane et un (éthylènediaminepropyl)triméthoxysilane ou dans laquelle l'ingrédient (iv) est choisi parmi le phényltriméthoxysilane, le (éthylènediaminepropyl)triméthoxysilane, le vinyltriméthoxysilane, l'orthosilicate de tétraalcyle ayant pour formule générale SiOR₄, comme le tétraéthoxysilane, les silanes à fonction mercapto, le triméthoxysilane de glycidyloxypropyle et n'importe quelle combinaison de ceux-ci.

6. Composition d'apprêt selon n'importe laquelle des revendications précédentes, dans laquelle l'ingrédient (v) a pour formule générale :
(R¹R²R³SiO_{1/2})ₐ(R⁴R⁵SiO_{2/2})_{b}(R⁶SiO_{3/2})_{c}(SiO_{4/2})_{d},
dans laquelle 0<a<1, b≥0, c≥0, 0<d<1, a+b+c+d=1, et 0,2<a/d<3,5 ; a, b, c et d sont des fractions molaires, R¹-R⁶ sont indépendamment choisis parmi un groupe hydrocarbure monovalent, un groupe carbinol, un groupe alcoxy ou un groupe amino ; et dans laquelle l'ingrédient (v) a un poids moléculaire moyen en poids entre 1 000 et 100 000 sur une base de polystyrène standard par chromatographie par filtration sur gel.

7. Composition d'apprêt selon la revendication 6, dans laquelle b et c dans l'ingrédient (v) ont une valeur d'environ 0 et/ou dans laquelle R¹-R⁶ ne comprennent pas de groupes à fonction acrylate.

8. Composition d'apprêt selon n'importe laquelle des revendications précédentes, dans laquelle les ingrédients (i) et (vi) sont complètement miscibles aux ingrédients (ii), (iii), (iv) et (v), seuls ou en combinaison.

9. Procédé d'amélioration de l'adhérence d'agents d'étanchéité à base de silicone sur des substrats peints, comprenant l'application d'un fond sur le substrat avec la composition telle que définie dans l'une quelconque des revendications 1-8.

10. Procédé de fourniture d'un mode de défaillance de cohésion amélioré d'agents d'étanchéité à base de silicone dans la matrice d'agent d'étanchéité, comprenant l'application d'un fond sur le substrat avec la composition telle que définie dans l'une quelconque des revendications 1-8.

11. Procédé d'application d'un fond à une surface de substrat peinte, comprenant les étapes consistant à :
- facultativement nettoyer la surface du substrat pour éliminer les contaminants et sécher la surface du substrat ;
- appliquer une composition d'apprêt à la surface de substrat peinte, la composition comprenant :
(i) un solvant d'acétate de tert-butyle;
(ii) un réactif organométallique choisi parmi un organotitanate, un organozirconate, un aluminium et n'importe quelle combinaison de ceux-ci;
(iii) un composé d'organoétain ;
(iv) un silane avec au moins trois groupes hydrolysables ; et
(v) une résine de polyorganosiloxane ;
(vi) facultativement un second solvant choisi parmi les solvants exempts de VOC qui, lorsqu'il est présent, l'est dans un rapport pondéral de l'ingrédient (i) à l'ingrédient (vi) de 70:30 à 95:5.
- permettre à la composition d'apprêt de sécher ; et appliquer un agent d'étanchéité à base de silicone au substrat peint.

12. Composition d'apprêt selon la revendication 1, comprenant :
(i) un solvant d'acétate de tert-butyle ;
(ii) un réactif organométallique choisi parmi un organotitanate, un organozirconate, un aluminium et n'importe quelle combinaison de ceux-ci;
(iii) un composé d'organoétain ;
(iv) un silane à fonction alcoxy ; et
(v) résine de polyorganosiloxane ayant pour formule générale:
(R¹R²R³SiO_{1/2})ₐ(R⁴R⁵SiO_{2/2})_{b}(R⁶SiO_{3/2})c(SiO_{4/2})_{d},
dans laquelle 0<a<1, b≥0, c≥0, 0<d<1, a+b+c+d=1, et 0,2<a/d<3,5 ; a, b, c et d étant des fractions molaires, R¹-R⁶ sont indépendamment choisis parmi des groupes hydrocarbonés monovalents et dans laquelle R¹-R⁶ ne comprennent pas de groupes à fonction acrylate ; et
(vi) facultativement un second solvant choisi parmi les solvants exempts de VOC qui, lorsqu'il est présent, l'est dans un rapport pondéral de l'ingrédient (i) à l'ingrédient (vi) de 70:30 à 95:5, ou n'importe quelle combinaison de ceux-ci;
et
dans laquelle la résine a un poids moléculaire moyen en poids entre 1 000 et 100 000 sur une base de polystyrène standard par chromatographie par filtration sur gel.
